# EUROPEAN PATENT APPLICATION

(11) **EP 3 091 704 A1**
(43) Date of publication of application: **09.11.2016**
(21) Application number: 14876246.1
(22) Date of filing: 25.06.2014
(51) Int. Cl.: H04L 29/06

(54) **INFORMATION PROCESSING METHOD AND DEVICE, SERVER AND TERMINAL**

(30) Priority: 31.12.2013 CN 201310753179
(71) Applicant: ZTE Corporation, Shenzhen City, Guangdong Province 518057 (CN)
(72) Inventor: MOU, Tinge, Shenzhen Guangdong 518057 (CN)
(74) Representative: Mozzi, Matteo
(86) International application number: PCT/CN2014/080760
(87) International publication number: WO 2015/100977

(57) **Abstract**

Provided are a method and device for processing information, a server and a terminal. The present disclosure includes: service information of a service of a terminal is acquired, wherein the service is a supplementary service in an Internet Protocol (IP) Multimedia Subsystem (IMS), and the acquired service information is sent to a terminal. The problems in the related art that during the terminal subscribes to a service, the memory consumption of the server is high when there are many users subscribing services and resources such as memory and bandwidth are wasted when there are few users subscribing services, thereby achieving the effects of reducing the memory consumption of the server, saving the resources such as memory and bandwidth, and improving the user experience.

## Description

### Technical Field

The present disclosure relates to the field of communications, and in particular to a method and device for processing information, a server and a terminal.

### Background

In an Internal Protocol (IP) Multimedia Subsystem (IMS) network, supplementary services are implemented by a server. However, for some supplementary services such as a service of playing a special dial tone for a user who subscribes a call forwarding unconditional service, an immediate hotline service and a delay hotline service, entire service flows may be implemented under the cooperation of a terminal, therefore it is necessary for the server to notify a terminal of relevant service information in a certain manner.

A subscription and notification manner is adopted in China Telecom *IMS network PSTN emulation service technical requirement (event subscription mechanism) V1.1.* After a user is registered, it is necessary to send a message (SUBSCRIBE) to a server to initiate a service subscription. The server notifies the user of corresponding service information by means of a message (NOTIFY). As dialogues generated by subscriptions have always existed and all users are required to subscribe, the memory consumption of the server is high. In addition, when there are few users who are required to be notified the service information, all users are required to subscribe in such a way. Thus, most of the subscriptions are useless, and resources such as memory and bandwidth are wasted.

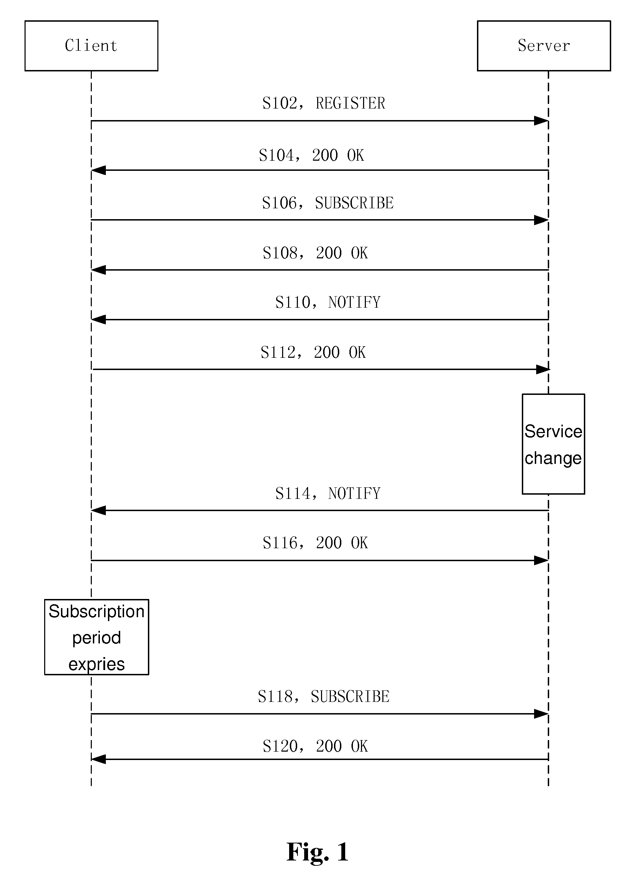

Fig. 1 is a flowchart of service processing in a related art. Fig. 1 shows a flow of adopting of a subscription mode after a registration succeeds, and sending of a message (NOTIFY) by a core network after a subscription succeeds. The flowchart is described below by taking a supplementary service subscription as an example. The flowchart of service processing includes the steps as follows.

S102: A terminal (i.e., a terminal user) initiates a registration to a server.

S104: The server returns to the terminal a message indicating the registration succeeds.

S106: After the registration succeeds, the terminal initiates a supplementary service subscription request to the server.

S108: The server returns a subscription success message to the terminal.

S110: After a subscription succeeds, when there exists a call forwarding unconditional service, a hotline service or other services, the server sends an NOTIFY message to notify the terminal, wherein the NOTIFY message carries corresponding service information.

S112: The terminal returns a response message.

S114: When the terminal adds, modifies or cancels the call forwarding unconditional service, the hotline service or the other services subsequently, the server will send the NOTIFY message to notify the terminal of the corresponding service information.

S116: The terminal returns a corresponding message.

S118: When a service subscription period of the terminal expires, a subscription message is required to be re-sent to the server so as to execute the service subscription.

S120: The server will return a subscription success message to the terminal.

Consequently, the problems that for the service subscription, the memory consumption of the server is high when many users subscribes services and the resources such as memory and bandwidth are wasted when few users subscribe services in the related art.

### Summary

The present disclosure provides a method and device for processing information, a server and a terminal, so as to at least solve the problems in the related art that for the service subscription, the memory consumption of a server is high when many users subscirbe services and resources such as memory and bandwidth are wasted when few users subscribes services.

According to one aspect of the present disclosure, a method for processing information is provided, comprising: acquiring service information of a service of a terminal, wherein the service of the terminal comprises a supplementary service in an Internal Protocol (IP) Multimedia Subsystem (IMS); and sending the acquired service information to the terminal.

In an example embodiment, the service information comprises at least one of: service addition information, service modification information and service deletion information.

In an example embodiment, sending the acquired service information to the terminal comprises: sending a message (MESSAGE) to the terminal, wherein the MESSAGE carries a service identifier of a service corresponding to the service information.

According to another aspect of the present disclosure, a method for processing information is provided, comprising: sending a service information request to a server, wherein the service information request is used for requesting service information of a service of a terminal, and the service of the terminal is a supplementary service in an Internal Protocol (IP) Multimedia Subsystem (IMS); and receiving the service information, sent by the server, of the service of the terminal.

In an example embodiment, receiving the service information, sent by the server, of the service of the terminal comprises: receiving a message (MESSAGE) sent by the server, wherein the MESSAGE carries a service identifier of a service corresponding to the service information.

According to another aspect of the present disclosure, a device for processing information is provided, comprising: an acquiring component, configured to acquire service information of a service of a terminal, wherein the service of the terminal is a supplementary service in an Internal Protocol (IP) Multimedia Subsystem (IMS); and a first sending component, configured to send the acquired service information to the terminal.

In an example embodiment, the first sending component comprises: a sending element, configured to send a message (MESSAGE) to the terminal, wherein the MESSAGE carries a service identifier of a service corresponding to the service information.

According to another aspect of the present disclosure, a server is provided, comprising the device according to any one of the above descriptions.

According to another aspect of the present disclosure, a device for processing information is provided, comprising: a second sending component, configured to send a service information request to a server, wherein the service information request is used for requesting service information of a service of a terminal, and the service of the terminal is a supplementary service in an Internal Protocol, IP, Multimedia Subsystem, IMS; and a receiving component, configured to receive the service information, sent by the server, of the service of the terminal.

In an example embodiment, the receiving component comprises: a receiving element, configured to receive a message (MESSAGE) sent by the server, wherein the MESSAGE carries a service identifier of a service corresponding to the service information.

According to another aspect of the present disclosure, a terminal is provided, which may include the second device according to any one of the above descriptions.

The present disclosure, by means of the method of acquiring service information of the terminal service which is the supplementary service in the IMS and sending the acquired service information to the terminal, solves the problems in the relevant art that when the terminal subscribes to a service, the memory consumption of the server is high in the presence of many terminal users and resources such as memory and bandwidth are wasted in the presence of few users, thereby achieving the effects of reducing the memory consumption of the server, saving the resources such as memory and bandwidth, and improving the user experience.

### Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of service processing in the related art;
Fig. 2 is a flowchart one of a method for processing information according to an embodiment of the present disclosure;
Fig. 3 is a flowchart two of a method for processing information according to an embodiment of the present disclosure;
Fig. 4 is a structure diagram of a first device for processing information according to an embodiment of the present disclosure;
Fig. 5 is a structure diagram of the first sending component 44 in the first device for processing information according to an embodiment of the present disclosure;
Fig. 6 is a structure diagram of a server according to an embodiment of the present disclosure;
Fig. 7 is a structure diagram of a second device for processing information according to an embodiment of the present disclosure;
Fig. 8 is a structure diagram of the receiving component 74 in the second device for processing information according to an embodiment of the present disclosure;
Fig. 9 is a structure diagram of a terminal according to an embodiment of the present disclosure;
Fig. 10 is a flowchart of direct notification of a core network via an MESSAGE after a registration succeeds according to an embodiment of the present disclosure;
Fig. 11 is a flowchart of implementation of an immediate hotline service via an MESSAGE according to an embodiment of the present disclosure;
Fig. 12 is a flowchart of implementation of a call waiting service via an MESSAGE according to an embodiment of the present disclosure; and
Fig. 13 is a flowchart of implementation of a malicious call service via an MESSAGE according to an embodiment of the present disclosure.

### Detailed Description of the Embodiments

The present disclosure is described below with reference to the drawings and the embodiments in detail. It is important to note that the embodiments of the present disclosure and the characteristics in the embodiments can be combined under the condition of no conflicts.

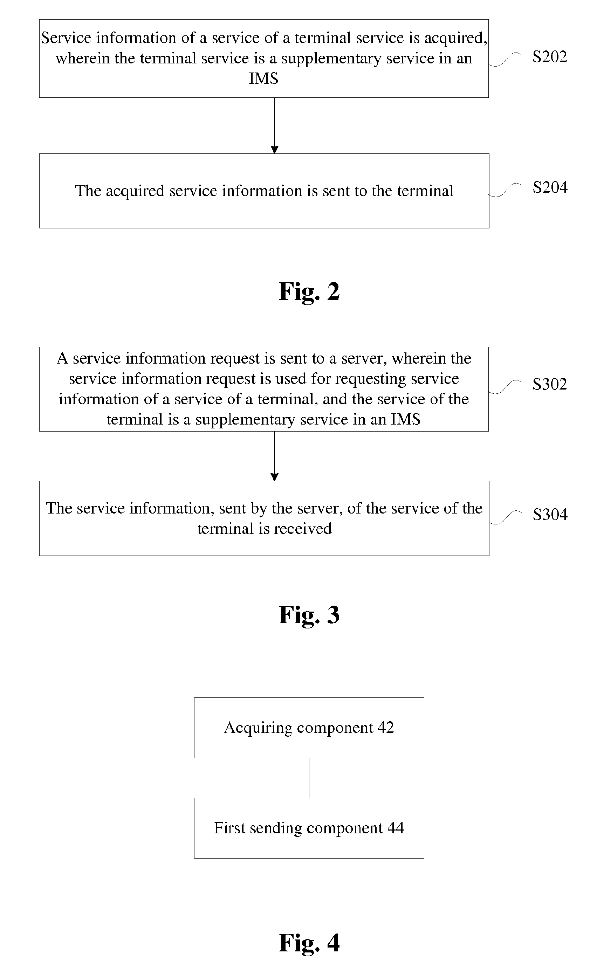

In the embodiment, a method for processing information is provided. Fig. 2 is a flowchart one of a method for processing information according to an embodiment of the present disclosure. As shown in Fig. 2, the flow includes the steps as follows.

Step S202: Service information of a service of a terminal is acquired, wherein the service of the terminal is a supplementary service in an IMS.

Step S204: The acquired service information is sent to the terminal.

By means of the steps, when the service information of the service of the terminal is acquired, the acquired service information is sent to the terminal immediately, wherein the service of the terminal is the supplementary service in the IMS. The problems in the related art that when the terminal acquires the service information of the service of the terminal, the terminal sends a subscription request to the server, the server feeds the service information back to the terminal based on the subscription request. A subscription flow requires reserve resources for interaction between the server and the terminal within a longer period, so that when the terminal subscribes a service, the memory consumption of the server is high when there are many terminal subscribing services and resources such as memory and bandwidth are wasted when there are few users subscribing services are solved, thereby reducing the memory consumption of the server, saving the resources such as memory and bandwidth, and improving the user experience.

It is thus evident that the server acquires the service information of the service of the terminal, and the service information of the service of the terminal may be of various types, including service addition information, service modification information and service deletion information. Different pieces of service information can be acquired for different service operations, thereby making a service changed simply and quickly.

After the server acquires the service information of the service of the terminal, the server sends the service information to the terminal in various sending manners, wherein the server may send an MESSAGE to the terminal, and may send other similar messages, of course; the MESSAGE will carry a service identifier of a service corresponding to the service information; and the terminal can perform a service addition operation, a modification operation or a deletion operation according to the service identifier.

In the embodiment, a method for processing information is further provided. Fig. 3 is a flowchart two of a method for processing information according to an embodiment of the present disclosure. As shown in Fig. 3, the flow includes the steps as follows.

Step S302: A service information request is sent to a server, wherein the service information request is used for requesting service information of a service of a terminal, and the service of the terminal is a supplementary service in an IMS.

Step S304: The service information, sent by the server, of the service of the terminal is received.

By means of the steps, the service information request is sent to the server, wherein the service information request is used for requesting the service information of the service of the terminal, and the terminal service is the supplementary service in the IMS; and the service information, sent by the server, of the service of the terminal is received. The problems in the related art that when the terminal subscribes a service, the memory consumption of the server is high when there are many terminal users subscribing services and resources such as memory and bandwidth are wasted when there are few users subscribing services, thereby reducing the memory consumption of the server, saving the resources such as memory and bandwidth, and improving the user experience.

After the terminal sends the service information request to the server, the service information, sent by the server, of the service of the terminal will be received. Wherein, the step that the terminal receives the service information, sent by the server, of the service of the terminal includes that: an MESSAGE sent by the server is received, wherein the MESSAGE carries a service identifier of a service corresponding to the service information. Of course, the terminal can also receive other pieces of information which are sent by the server and carry the service identifier of the service corresponding to the service information, and the terminal can perform a service addition operation, a modification operation or a deletion operation according to the identifier information without sending any subscription requests to the server, thereby simplifying a service processing process. Meanwhile, the memory of the server can be saved, and the user experience can be improved.

In the embodiment, a device for processing information is further provided. The device is configured to implement the embodiment and an example implementation mode, and those which have been described are no longer repeated. Just as a term 'component' used below, the combination of software and/or hardware with predetermined functions can be achieved. Although the device described by the following embodiment is better implemented by the software, achieving of the hardware or the combination of the software and the hardware may be possible and may be conceived.

Fig. 4 is a structure diagram of a first device for processing information according to an embodiment of the present disclosure. As shown in Fig. 4, the device includes an acquiring component 42 and a first sending component 44, and the first device for processing information is described below.

The acquiring component 42 is configured to acquire service information of a service of a terminal, wherein the service of the terminal is a supplementary service in an IMS; and the first sending component 44 is connected to the acquiring component 42 and is configured to send the acquired service information to the terminal.

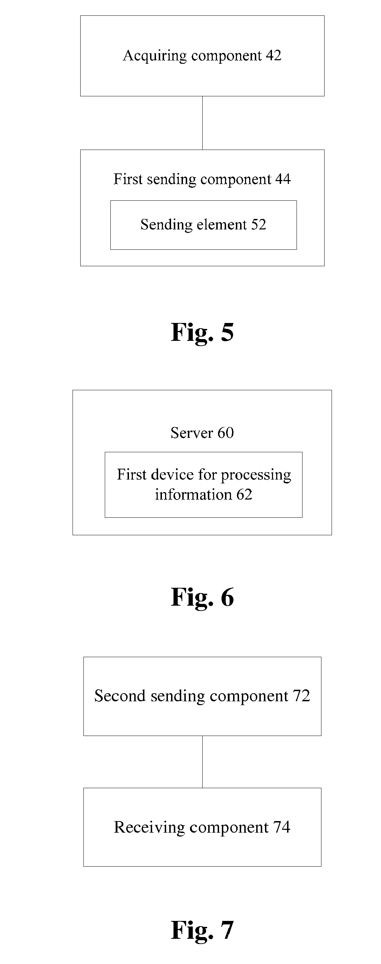

Fig. 5 is a structure diagram of the first sending component 44 in the first device for processing information according to an embodiment of the present disclosure. As shown in Fig. 5, the first sending component 44 includes a sending element 52, and the first sending component 44 is described below.

The sending element 52 is configured to send an MESSAGE to the terminal, wherein the MESSAGE carries a service identifier of a service corresponding to the service information.

Fig. 6 is a structure diagram of a server according to an embodiment of the present disclosure. As shown in Fig. 6, the server 60 includes the first device for processing information 62 according to any one of the above descriptions.

Fig. 7 is a structure diagram of a second device for processing information according to an embodiment of the present disclosure. As shown in Fig. 7, the device includes a second sending component 72 and a receiving component 74. The second device is described below.

The second sending component 72 is configured to send a service information request to a server, wherein the service information request is used for requesting service information of a service of a terminal, and the service of the terminal is a supplementary service in an IMS; and the receiving component 74 is connected to the second sending component 72 and is configured to receive the service information, sent by the server, of the service of the terminal.

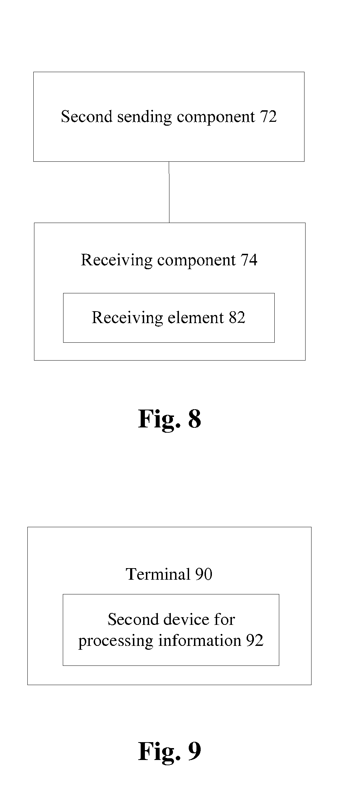

Fig. 8 is a structure diagram of the receiving component 74 in the second device for processing information according to an embodiment of the present disclosure. As shown in Fig. 8, the receiving component 74 includes a receiving element 82, and the receiving component 74 is described below.

The receiving element 82 is configured to receive an MESSAGE sent by the server, wherein the MESSAGE carries a service identifier of a service corresponding to the service information.

Fig. 9 is a structure diagram of a terminal according to an embodiment of the present disclosure. As shown in Fig. 9, the terminal 90 includes the second device for processing information 92 according to any one of the above descriptions.

It is thus evident that the problems that during the service subscription, the memory consumption of the server is high when there are many users subscribing services and the resources such as memory and bandwidth are wasted when there are few users subscribing services in the related art. Thus, in order to solve the problems, the embodiments of the present disclosure provide a solution of carrying service relevant information in messages such as an MESSAGE. In the solution, a terminal does not be required to actively send a subscription request to subscribe to a service, and the server actively notifies the terminal instead. When the terminal adds, modifies or cancels some services (such as a call forwarding unconditional service or a hotline service), the server will actively send a message (MESSAGE) carrying the corresponding service information, to notify the terminal user.

The server, merely when the terminal subscribing corresponding services changes a service, will notify the terminal in the above mode, so that the occupation of the memory and bandwidth of the server during service processing can be well reduced. Moreover, the MESSAGE can achieve one-time interaction completion, and dialogues will not be reserved within a period of validity all the time like a subscription mode in the related art, so that the consumption of the memory of the server can be well reduced.

The terminal can be completely compatible with a service processing method in the related art in the above mode. That is, when the terminal sends an SUBSCRIBE message to the server to subscribe a service, the server will send an NOTIFY message to the terminal to notify a user of service information. Similarly, it can be achieved that when the terminal does not send the SUBSCRIBE message to subscribe the service and when the terminal applies for or changes a service to be notified, the server will send an MESSAGE to notify the terminal.

Connections and differences between a control manner based on a message such as MESSAGE and so on and a control manner based on a subscription operation and an issued NOTIFY message are described below with reference to the embodiments.

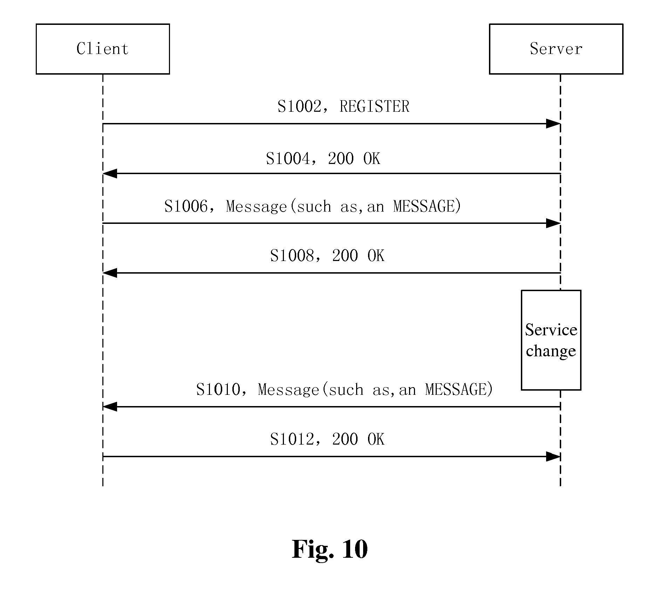

Fig. 10 is a flowchart of direct notification of a core network via an MESSAGE after a registration succeeds according to an embodiment of the present disclosure. As shown in Fig. 10, the flowchart includes the steps as follows.

S1002: A terminal user initiates a registration to a server.

S1004: The server returns a registration success message to a terminal.

S1006: After the registration of the terminal succeeds, when there exists a call forwarding unconditional service, a hotline service or other services, the server sends an MESSAGE, wherein the MESSAGE carries corresponding service information, to notify the terminal.

S1008: The terminal returns a receiving success message to the server.

S1010: When the terminal user adds, modifies or cancels the call forwarding unconditional service, the hotline service or the other services subsequently, the server notifies the terminal of the corresponding service information by means of the MESSAGE.

S1012: The terminal returns a receiving success message to the server.

The flow of specific service processing is described below with reference to the embodiments of the present disclosure.

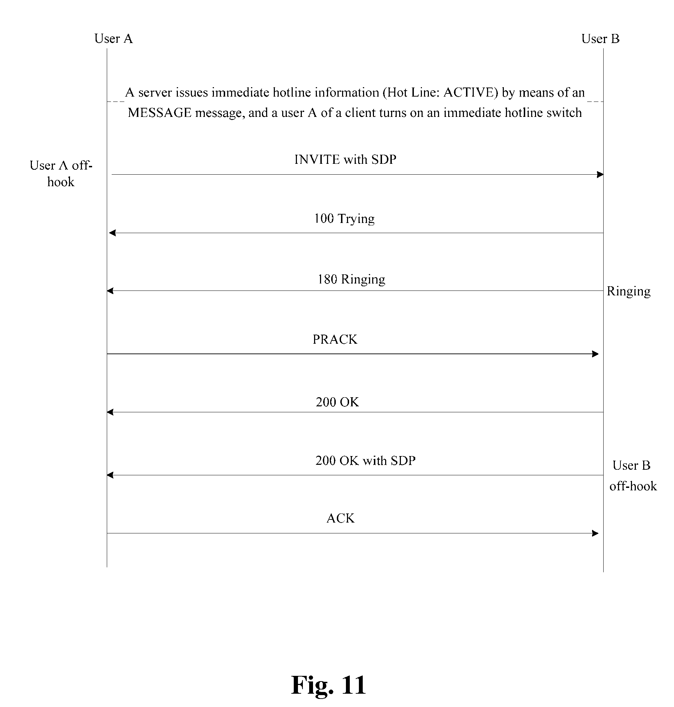

Fig. 11 is a flowchart of implementation of an immediate hotline service via an MESSAGE according to an embodiment of the present disclosure. As shown in Fig. 11, the flowchart substantially includes that: a server issues an MESSAGE carrying an identifier of an immediate hotline (Hot Line: ACTIVE) service, a terminal turns on an immediate hotline switch at a terminal side via the identifier, and a call can be made after off-hook without dialling.

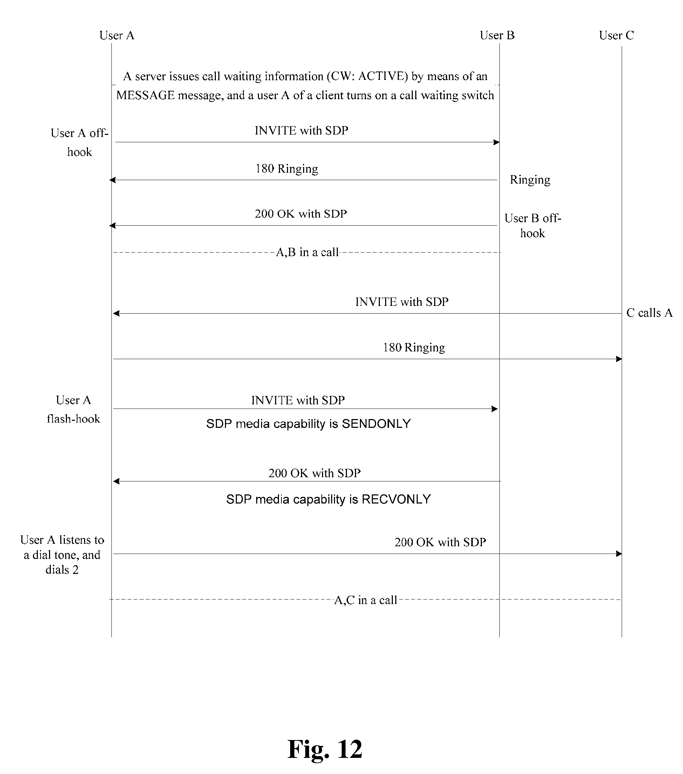

Fig. 12 is a flowchart of implementation of a call waiting service via an MESSAGE according to an embodiment of the present disclosure. As shown in Fig. 12, the flowchart substantially includes that: a server issues an MESSAGE carrying an identifier of a call waiting (CW: ACTIVE) service, a terminal turns on a call waiting switch at a terminal side via the identifier, and when there is an incoming call from a third party, it is determined whether a call waiting flow is executed according to the switch, so as to complete a call waiting service flow implemented at the terminal side.

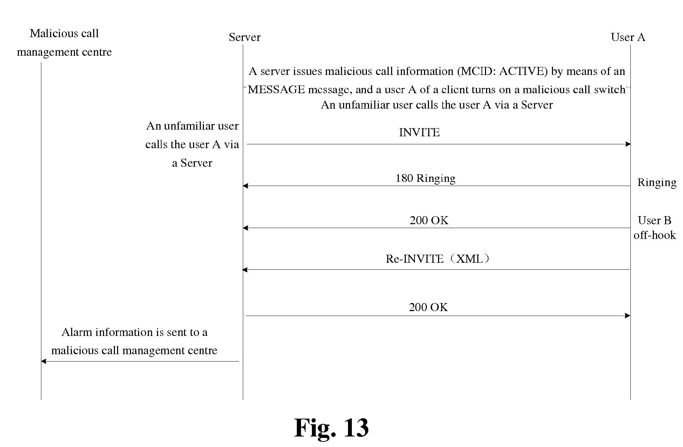

Fig. 13 is a flowchart of implementation of a malicious call service via an MESSAGE according to an embodiment of the present disclosure. As shown in Fig. 13, the flowchart substantially includes that: a server issues an MESSAGE carrying a identifier of a malicious call (MCID: ACTIVE) service, a terminal turns on a malicious call switch at a terminal side via the identifier, and after receiving a malicious call, the terminal reports malicious call information to the server according to the switch, so as to record the malicious call.

It is important to note that: the messages involved in the present disclosure include, but not limited to, the MESSAGE, other similar messages fall within the scope contained by the present disclosure, processed services include, but not limited to, the immediate hotline service, the call waiting service and the malicious call service, and all the services processed between a terminal and a server can fall within the protective scope of the present disclosure. The present disclosure mainly describes a behaviour of notifying a client by means of a certain message or mode between the client and a server system.

Obviously, those skilled in the art should understand that all components or all steps in the present disclosure can be implemented by using a general calculation device, can be centralized on a single calculation device or can be distributed on a network composed of a plurality of calculation devices. Optionally, they can be implemented by using executable program codes of the calculation devices. Thus, they can be stored in a storage device and executed by the calculation devices, the shown or described steps can be executed in a sequence different from this sequence under certain conditions, or they are manufactured into each integrated circuit module respectively, or a plurality of modules or steps therein are manufactured into a single integrated circuit module. Thus, the present disclosure is not limited to a combination of any specific hardware and software.

The above is only the preferred embodiments of the present disclosure, and is not intended to limit the present disclosure. There can be various modifications and variations in the present disclosure for those skilled in the art. Any modifications, equivalent replacements, improvements and the like within the spirit and principle of the present disclosure shall fall within the protection scope of the present disclosure.

### Industrial Applicability

As above, by means of the embodiments and the example implementation mode, the problems in the related art that when a terminal subscribes to a service, the memory consumption of a server is high when there are users subscribing services and resources such as memory and bandwidth are wasted when there are few users subscribing services are solved, thereby achieving the effects of reducing the memory consumption of the server, saving the resources such as memory and bandwidth, and improving the user experience.

## Claims

1. A method for processing information, comprising:
acquiring service information of a service of a terminal, wherein the service of the terminal comprises a supplementary service in an Internal Protocol, IP, Multimedia Subsystem, IMS; and
sending the acquired service information to the terminal.

2. The method as claimed in claim 1, wherein the service information comprises at least one of:
service addition information, service modification information and service deletion information.

3. The method as claimed in claim 1, wherein sending the acquired service information to the terminal comprises:
sending a message, MESSAGE, to the terminal, wherein the MESSAGE carries a service identifier of a service corresponding to the service information.

4. A method for processing information, comprising:
sending a service information request to a server, wherein the service information request is used for requesting service information of a service of a terminal, and the service of the terminal is a supplementary service in an Internal Protocol, IP, Multimedia Subsystem, IMS; and
receiving the service information, sent by the server, of the service of the terminal.

5. The method as claimed in claim 4, wherein receiving the service information, sent by the server, of the service of the terminal comprises:
receiving a message, MESSAGE, sent by the server, wherein the MESSAGE carries a service identifier of a service corresponding to the service information.

6. A device for processing information, comprising:
an acquiring component, configured to acquire service information of a service of a terminal, wherein the service of the terminal is a supplementary service in an Internal Protocol, IP, Multimedia Subsystem, IMS; and
a first sending component, configured to send the acquired service information to the terminal.

7. The device as claimed in claim 6, wherein the first sending component comprises:
a sending element, configured to send a message, MESSAGE, to the terminal, wherein the MESSAGE carries a service identifier of a service corresponding to the service information.

8. A server, comprising the device as claimed in claim 6 or 7.

9. A device for processing information, comprising:
a second sending component, configured to send a service information request to a server, wherein the service information request is used for requesting service information of a service of a terminal, and the service of the terminal is a supplementary service in an Internal Protocol, IP, Multimedia Subsystem, IMS; and
a receiving component, configured to receive the service information, sent by the server, of the service of the terminal.

10. The device as claimed in claim 9, wherein the receiving component comprises:
a receiving element, configured to receive a message, MESSAGE sent by the server, wherein the MESSAGE carries a service identifier of a service corresponding to the service information.

11. A terminal, comprising the device as claimed in any one of claims 9 to 10.
